# EUROPÄISCHE PATENTANMELDUNG

(11) **EP 1 318 009 A1**
(43) Veröffentlichungstag der Anmeldung: **11.06.2003**
(21) Anmeldenummer: 02027300.9
(22) Anmeldetag: 06.12.2002
(51) Int. Cl.: B32B 5/18, B32B 3/02, B29C 44/04, B29C 44/08

(54) **Mehrschicht-Formteil, insbesondere Innenraum-Teil für ein Kraftfahrzeug, sowie Verfahren zur Herstellung des Formteils**

(30) Priorität: 07.12.2001 DE 10160173
(71) Anmelder: Seeber Aktiengesellschaft & Co., 68165 Mannheim (DE)
(72) Erfinder: Starke, Joachim, 81375 München (DE); Kernbeis, Peter, 85774 Unterföhring (DE)
(74) Vertreter: Prechtel, Jörg, Dipl.-Phys. Dr.

(57) **Zusammenfassung**

Es wird ein Mehrschicht-Formteil (10), insbesondere Innenraum-Teil für ein Kraftfahrzeug vorgeschlagen umfassend ein Trägerteil (20) und eine eine Sichtfläche des Formteils (10) bildende Formhaut (22) am Trägerteil (20), wobei die Formhaut (22) wenigstens einen im Inneren aufgeschäumten und deshalb elastisch nachgiebigen ersten Flächenabschnitt (22a) und wenigstens einen im Wesentlichen schaumfreien und deshalb im Wesentlichen nicht elastisch nachgiebigen zweiten Flächenabschnitt (22b, 22c) aufweist.

## Beschreibung

Die Erfindung betrifft ein Mehrschicht-Formteil, insbesondere Innenraum-Teil für ein Kraftfahrzeug.

An Mehrschicht-Formteile, insbesondere Innenraum-Teile für ein Kraftfahrzeug, werden hohe Anforderungen in Bezug auf Aussehen und Haptik gestellt. Bei diesen im Allgemeinen großflächigen Formteilen gibt es häufig Bereiche, die weich sein sollen (Armauflage, Brüstung, Instumententafelhutze, Knieaufprallbereiche), während in den übrigen Bereichen geringes Gewicht und geringe Kosten im Vordergrund stehen.

Bei Türverkleidungen, Mittelkonsolen, Ablagen und anderen großflächige Verkleidungsteilen im Kraftfahrzeuginnenraum wird bislang eine Folie als Dekormaterial eingesetzt, die somit die Sichtfläche (und Berührungsfläche) des Formteils bildet. Folien haben als vorfabrizierte, dünne Flächenelemente den Nachteil, dass Ecken und Kanten stark verrundet werden müssen, um eine Foliendehnung gering zu halten. Zu große Foliendehnung kann einerseits zur Zerstörung der Oberflächenkontur und andererseits zu einer Foliendickenreduzierung bis hin zum Reißen der Folie führen.

Im Gegensatz dazu können Formhäute in idealer Weise eine vorgegebene Oberflächenkontur nachbilden, da sie in einer die gewünschte Oberflächenkontur als Negativ aufweisenden Form hergestellt werden. Es sind mehrere Herstellungsverfahren für Formhäute bekannt. Zu nennen ist die Rotationssintertechnik, bei der PVC-Pulver, gelegentlich auch thermoplastisches Polyurethan (TPU), eingesetzt wird. Bei der Sprühtechnik wird bevorzugt lichtechtes Polyurethan (aliphatisches PUR) in die Form gesprüht. Eine weitere der Formhautherstellungstechnik ist die Gießtechnik, die in erster Line bei Polyurethan Verwendung findet.

Bei der Herstellung von großflächigen Bauteilen innerhalb des Kraftfahrzeuginnenraums (z.B. Tür- und Seitenverkleidungen) werden bislang Teile aus drei Schichten eingesetzt, bestehend aus dem Trägerteil, das für die erforderliche mechanische Stabilität sorgt, der Formhaut, die die Sicht- und Berühungsfläche des Bauteils bildet, und der dazwischen eingebrachten unterschiedlich dicken Schaumstoffschicht, die für die gewünschte bereichsweise -Weichheit des Formteils sorgt. So wie beispielsweise in der Gebrauchsmusterschrift DE 201 00 506 U1 beschrieben, wird in einem Dreischritt-Verfahren die Gießhaut und das Trägerteil jeweils seperat ausgeformt und im dritten Schritt flüssiges PUR (Weichschaumeinstellung) in einen zwischen Gießhaut und Trägerteil gebildeten Zwischenraum eingespritzt, wobei ein an der Gießhaut ausgebildeter Dichtprofilrand für eine Abdichtung des Zwischenraums sorgt. Das PUR schäumt im Zwischenraum auf und verbindet die Formhaut mit dem Trägerteil dauerhaft. Der jeweilige Abstand zwischen Formhaut und Trägerteil bestimmt die Dicke der Schaumschicht und damit die lokale Haptik, insbesondere elastische Nachgiebigkeit, des Formteils.

Kann auf die Weichheit verzichtet werden, so ist es bekannt, die Formhaut auch direkt mit dem Trägerteil zu versehen (Hinterspritzen, Hinterschäumen mit Halbhartschaum, Hinterpressen oder Ähnliches) bzw. umgekehrt, d.h. an das Trägerteil wird eine Formhaut geringer Wandstärke (0,8 - 1,5 mm) angeformt, insbesondere durch Übergießen mit vergleichsweise geringer Dicke (0,8 - 1,5 mm) und einer Dichte von etwa 1 kg/cm³. Mit dieser Technik werden bisher vergleichsweise kleine komplete Formteile (Deckel in der Mittelarmlehne) hergestellt.

Aus der DE 196 11 192 A1 ist es bekannt, ein Amaturenbrett aus einem geschäumten Trägerteil herzustellen, welches mit einer z.B. pyramidenförmig strukturierten, Schall absorbierenden Struktur 16 versehen ist, auf die wiederum eine Formhaut aufgetragen ist. Absorbierende Struktur und Formhaut können aus dem selben Material (Integralschaum) bestehen, wobei die Dichte der Struktur wesentlich geringer ist, als die der Haut.

Ferner ist es bekannt, kompakte Innenraumteile (z.B. Lenkrad und Schaltknauf), d.h. Bauteile, die nicht als großflächige Bauteile bezeichnet werden können, dadurch herzustellen, dass ein Trägerteil mit einem Integralschaum umspritzt wird. Ein derartiger Integralschaum enthält ein zumeist physikalisch gelöstes Treibmittel, welches eine Mindesttemperatur benötigt, um in den gasförmigen Zustand überzugehen. Ist diese nicht erreicht bzw. wird diese unterschritten, während das PUR-System noch nicht ausreagiert ist, wird auf diese Weise ein Aufschäumen verhindert. Diesen Effekt macht man sich durch eine geringe Werkzeugwandtemperatur zu nutzte, wodurch man eine kompakte Oberflächenschicht mit einer optisch einwandfreien Sichtfläche erhält. Im Übrigen ist das Material aufgeschäumt, d.h. es weist einen zelligen Kern mit einer verdichteten Randzone auf (siehe auch DE 198 04 911 A1 sowie DE 40 05 624 A1, DE 196 50 854 C1, DE 659 02 963 T2 und DE 43 21 920 A1).

Der Erfindung liegt die Aufgabe zugrunde, ein Mehrschicht-Formteil, insbesondere Innenraum-Teil für ein Kraftfahrzeug bereitzustellen, welches bei geringem Gewicht, niedrigen Herstellungskosten und angenehmem Äußeren Bereiche mit unterschiedlicher elastischer Nachgiebigkeit aufweist.

Diese Aufgabe wird erfindungsgemäß dadurch gelöst, dass das Mehrschicht-Formteil ein Trägerteil umfasst, sowie eine die Sichtfläche des Formteils bildende Formhaut am Trägerteil, wobei die Formhaut wenigstens einen im Inneren aufgeschäumten und deshalb elastisch nachgiebigen ersten Flächenabschnitt und wenigstens einen im Wesentlichen schaumfreien und deshalb im Wesentlichen nicht-elastischen nachgiebigen zweiten Flächenabschnitt aufweist.

Erfindungsgemäß hat die Formhaut eine Doppelfunktion, indem sie nicht nur für die gewünschte "Optik" und den gewünschten Griff sorgt, sondern darüber hinaus an den Stellen, wo dies gewünscht wird, für die erforderliche elastische Nachgiebigkeit sorgt. Dies wird durch das Aufschäumen im entsprechenden Flächenabschnitt sichergestellt, wobei zumindest im Falle des Einsatzes eines Integralschaummaterials für die Formhaut die äußere Randschichtformhaut blasenfrei ist. Die elastische Nachgiebigkeit kann in gewünschter Weise dadurch eingestellt werden, dass man die Dicke der Formhaut in diesem Bereich entsprechend wählt. Je nach verwendetem Schaumsystem sind Dicken von beispielsweise 5 - 20 mm, vorzugsweise 7 - 15 mm, am Besten von 8 - 10 mm von Vorteil.

Die Übrigen (zweiten) Flächenabschnitte werden dagegen nicht aufgeschäumt und können somit kostensparend dünn hergestellt werden. Hier haben sich Dicken von 0,1 - 2 mm, besser von 0,2 und 1,5 mm, noch besser von 0,5 - 1 mm, am Besten von 0,6 - 0,8 mm bewährt.

Die entsprechenden Dichten des Formhautmaterials im Bereich des ersten Flächenabschnitts liegen bei 0,3 - 0,5 kg/cm³, vorzugsweise 0,35 - 0,50 kg/cm³, am Besten bei etwa 0,4 kg/cm³.

Die Erfindung ist von besonderem Vorteil bei großflächigen Mehrschicht-Formteilen. Es sind dies Formteile, bei denen die Flächendimensionen groß sind gegenüber der Dickendimension.

Erfindungsgemäß lassen sich insbesondere mit dem Reaktions-Spritz-Gießverfahren (reaktion - injection molding (RIM)), d.h. unter Einsatz eines reaktivem Harzsystemes, großflächige Mehrschicht-Formteile herstellen, bei denen der Fließweg in der Gußform mehr als 50 mm, besser mehr als 100 mm, am Besten mehr als 200 mm beträgt und die Dicke des schaumfreien (zweiten) Flächenabschnitts eine Dicke kleiner 1,5 mm, besser kleiner 1 mm, am Besten kleiner 0,7 mm aufweist.

Die Erfindung betrifft auch eine Formhaut als solche, die vorzugsweise jedoch nicht notwendigerweise zur Herstellung eines Mehrschicht-Formteils eingesetzt wird, welche Formhaut aus einem reaktiven Harzsystem, vorzugsweise von PU gebildet ist, wobei die Formhaut wenigstens einen im Inneren aufgeschäumten und deshalb elastisch nachgiebigen ersten Flächenabschnitt und wenigstens einen im Wesentlichen schaumfreien und deshalb im Wesentlichen nicht elastisch nachgiebigen zweiten Flächenabschnitt aufweist.

Die Erfindung betrifft schließlich ein Verfahren zur Herstellung eines Mehrschicht-Formteils wie vorstehend angesprochen. Dabei sind lediglich zwei Schritte zur Herstellung des erfindungsgemäßen Mehrschicht-Formteils erforderlich, wobei prinzipiell zwei Varianten in Frage kommen.

Gemäß der ersten Variante wird in einem ersten Schritt die Formhaut mittels eines Formhautherstellungsverfahrens hergestellt und in einem zweiten Schritt das Trägerteil mit Hilfe eines Trägerteilherstellungsverfahrens an die Formhaut angeformt.

Gemäß der alternativen zweiten Variante wird in einem ersten Schritt das Trägerteil mit Hilfe eines Trägerteilherstellungsverfahren hergestellt und in einem zweiten Schritt die Formhaut mittels eines Formhautherstellungsverfahrens an das Trägerteil angeformt.

Besonders bevorzugt geht man bei der zweiten Variante so vor, dass man im ersten Schritt das Trägerteil mit wenigstens einem Entlastungsdurchgang im Bereich des ersten Flächenabschnitts der im zweiten Schritt anzuformenden Formhaut ausbildet, und dass man im zweiten Schritt eine Druckentlastung im zweiten Bereich durch Formhautmaterialabfluß durch den wenigstens einen Entlastungsdurchgang vornimmt. Diese Druckentlastung kann beispielsweise dadurch realisiert werden, dass man ein Ventil oder Schieber der Gußform auf der von der Formhaut abgelegenen Seite auf des Trägerteils eröffnet. Dabei wird die Druckentlastung erst dann vorgenommen, wenn das Formhautmaterial im zweiten Flächenabschnitt von seinem dünnflüssigen Zustand in einen derart zähflüssigen Zustand übergegangen ist, dass sich die Druckentlastung in den zweiten Flächenbereich im Wesentlichen nicht fortsetzt. Dies wird durch die vergleichsweise geringe Dicke der Formhaut im zweiten Flächenbereich von unter 1 mm unterstützt.

Von besonderem Vorteil ist, wenn zur Druckentlastung ein bewegliches Teil der Gußform eingesetzt wird, vorzugsweise mit einer Größe, die dem zweiten Bereich im Wesentlichen entspricht. Auf diese Weise kann sich das überschüssige Formhautmaterial auf die von der Formhaut abgelegene Seite des Trägerteils verteilen zur flächigen Anformung an die Außenseite des Trägerteils.

Das überschüssige Material kann so zur Verstärkung des Mehrschicht-Formteils dienen, wobei es selbst elastisch nachgibig ist und so bei entsprechender Anbringung des Mehrschicht-Formteils an einem Träger eine stoßaufnehmende Und vibrationsunterdrückende Art der Befestigung ermöglicht. Andererseits ist die vom Trägerteil abgelegene Sichtsseite der angeformten Formhautvöllig unbeeinträchtigtvon Überschußmaterialresten oder dergleichen, so dass man eine exzellente Oberfläche erhält. Dies ist gerade für den bevorzugten Einsatzort bei Kraftfahrzeugen von ausschlaggebender Bedeutung.

Alternativ oder zusätzlich kann man zur Steuerung der Treibmittelfreisetzung die Gußform derart temperieren, dass die Temperatur des Formhautmaterials vor seiner Erstarrung im ersten Flächenabschnitt unterhalb einer Mindesttemperatur für die Freisetzung des Treibmittelgases liegt. Nicht notwendigerweise jedoch bevorzugt kann man die Gußform hierzu bereichsweise unterschiedlich temperieren.

Die Erfindung wird im folgenden an Hand der Zeichnung an zwei Ausführungsbeispielen erläutert.

Es zeigt:
- Figur 1: einen schematischen Schnitt einer ersten Ausführungsform eines mehrschichtigen Formteils gemäß der Erfindung in Form einer Armlehne mit angedeuteten Formhälften einer Gußform;
- Figuren 2 - 4: schematische Querschnittszeichnungen durch eine Gußform mit beweglichem Gußformteil und zwar vor dem Anformen der Formhaut (Figur 2), nach dem Einbringen des Formhautmaterials und vor dem Aufschäumen (Figur 3) und nach dem Aufschäumen durch Zurückziehen des beweglichen Gußformteils (Figur 4).

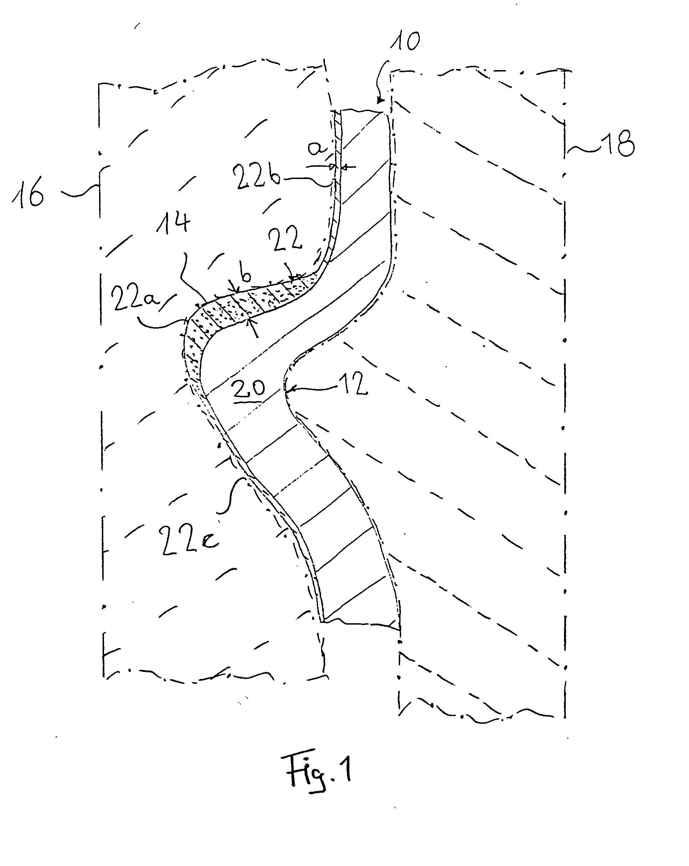

Figur 1 zeigt einen mittleren Abschnitt 12 eines allgemein mit 10 bezeichneten Mehrschicht-Formteils in Form einer Türverkleidung im Bereich einer Armlehne 14. Mit strichpunktierter Umrisslinie ist jeweils eine linke Formhälfte 16 sowie eine rechte Formhälfte 18 eines ansonsten weggelassenen zweiteiligen, formgebenden Werkzeugs angedeutet.

Die Türverkleidung besteht aus einem Trägerteil 20 und einer Formhaut 22. Unabhängig hiervon können natürlich weitere Elemente wie Verstärkungsschienen oder Fensterheber-Mechanikteile integiert sein, ohne am prinzipiellen zweischichtigen Aufbau des Formteils 10 etwas zu ändern.

Das Trägerteil 20, welches für die notwendige mechanische Stabilität sorgt, kann hierzu aus Gewichtsgründen aus einem ggf. faserverstärkten Hartschaummaterial bestehen. Es kommen Thermoplaste oder Duroplaste in Frage.

Entscheidend ist, dass die Formhaut 22 bereichsweise elastisch nachgiebig und bereichsweise nicht elastisch nachgiebig ausgebildet ist. So ist beispielsweise die Armlehne 14 mit einem aufgeschäumten Abschnitt (erster Flächenabschnitt) 22a der Formhaut versehen, wohingegen die sich nach oben und unten anschließenden Abschnitte (zweite Flächenabschnitte) 22b und 22c vergleichsweise dünn ausgebildet sind ohne innere Schaumbildung. Bei dem verwendeten Polyurethan-Integralschaum erhält man die gewünschte elastische Nachgiebigkeit durch eine Formhautdicke b im Bereich von 1 cm, wohin gegen die Formhautdicke a in den Abschnitten 26b und 26c unter 1 mm (bevorzugt 0,8 mm) liegt. Es sei noch einmal betont, dass die Zeichnung nur prinzipieller Natur und keinesfalls maßtäblich ist.

Bei der Herstellung der Formhaut 22 wird PUR-Material eingesetzt, in dem Treibmittel (z.B. He oder N₂) solange physikalisch gelöst ist, bis eine Mindesttemperatur überschritten wird, oberhalb derer das Treibmittel in den gasförmigen Zustand übergeht. Die Formhälfte 16 wird bei der Herstellung der Formhaut 22 unter die Mindesttemperatur für den Phasenübergang abgekühlt.

Die geringe Dicke a in den Abschnitten 22b und 22c führt dazu, dass in diesen Bereichen das Treibmittel im Formhautmaterial physikalisch gelöst bleibt, also nicht in den gasförmigen Zustand übergeht.

Eine äußere Randschicht der Formhaut 22 im Abschnitt 22a entsprechender Dicke weist aus dem gleichen Grund ebenfalls keine Blasen auf. Es schließt sich jedoch ein dickenmäßig weitaus überwiegender Bereich bis zum Trägerteil 20 hin an, in dem die Mindesttemperatur überschritten wird, so dass hier ein Aufschäumen stattfindet.

Die Herstellung des Formteils 10 erfolgt in zwei Schritten, wobei, wie schon erwähnt, zwei Varianten möglich sind.

In der ersten Variante wird als erstes das Trägerteil 20 hergestellt (in einer gesonderten Form oder in einer Form, die bereits die rechte Formhälfte 18 verwendend jedoch als linke Formhälfte eine an die gewünschte Oberflächenform angepaßte Formhälfte einsetzt, die nach der Formteilherstellung gegen die dargestellte Formhälfte 16 auszuwechseln ist).

Nach dem Aufsetzten der Formteilhälfte 16 wird in den zwischen der Formteilhälfte 16 und dem Trägerteil 20 gebildeten Zwischenraum Polyurethan eingespritzt, bis dieses den Zwischenraum ausfüllt. Aufgrund der genannten Temperaturbedingungen ergibt sich lediglich im Bereich des Abschnitts 22a ein Aufschäumen (anschließend an die durch Formteilhälfte 16 kühler gehaltene äußere Randschicht).

Nach dem Entformen erhält man ein Formteil, welches hohen Ansprüchen an das äußere Aussehen und die Haptik genügt, darüber hinaus wahlweise Bereiche mit hoher elastischen Nachgiebigkeit und allenfalls geringer Nachgiebigkeit aufweist. Der Materialeinsatz ist aufgrund der formgebenden, überwiegend ziemlich dünnen Flächenbereiche der Formhaut und der lediglich zweistufigen Herstellungsweise gering.

Die gleichen Vorteile erzielt man, wenn man zuerst die Formhaut 22 herstellt und anschließend das Trägerteil 20 an die Formhaut 22 anformt.

Zur Formhautherstellung kann entweder eine gesonderte zweiteilige Gußform verwendet werden oder eine Gußform, die für beide Schritte die selbe linke Formhälfte 16 einsetzt. Im ersten Schritt wird eine rechte Formhälfte eingesetzt, die entsprechend der Form des Trägerteils 20 konturiert ist. Im zweiten Schritt wird diese Formhälfte entfernt und die Formhälfte 18 montiert. In den dann gebildeten Zwischenraum zwischen Formhaut 22 und Formhälfte 18 wird das Material für das Trägerteil 20 eingespritzt.

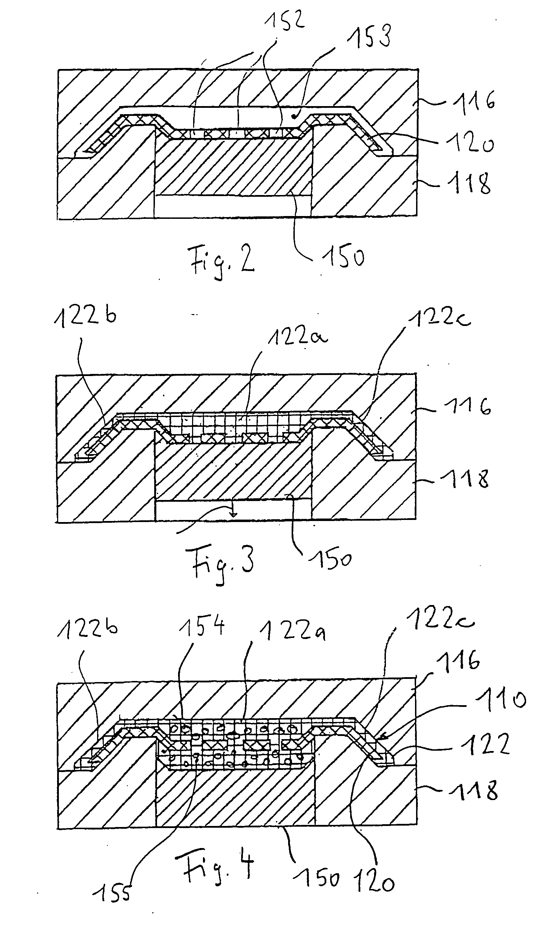

In den Figuren 2 - 4 werden eine weitere Variante eines Mehrschicht-Formteils und die Schritte seiner Herstellung schematisch dargestellt. Dabei sind Elemente, die ihrer Funktion nach im ersten Ausführungsbeispiel gemäß Figur 1 Entsprechungen haben, mit den selben Bezugsziffern, jeweils vermehrt um die Zahl 100 versehen.

Dementsprechend ist das fertiggestellte Mehrschicht-Formteil gemäß Figur 4 mit den Bezugszeichen 110 versehen. Es besteht aus dem Trägerteil 120 und der gemäß Figuren 2 - 4 an das Trägerteil 120 angeformten Formhaut 122.

Die Gußform wiederum weist eine formhautseitige Formhälfte 116 sowie eine trägerteilseitige Formhälfte 118. Auf letztere ist mit einem beweglichen Teil 150 versehen, welches aus seiner Anlage Position am Träger 122 senkrecht zur Trägerteiloberfläche (in den Figuren 2 - 4 nach unten) wegbewegbar ist, wie im nachfolgenden noch zu beschreiben ist.

Das Trägerteil 120 wird vorab hergestellt, wobei es je nach Formgebung und Einsatzweck extrudiert sein kann, oder in einer Form gegossen sein kann. Diese Form kann eine gesonderte Form sein. Man kann auch, wie bereits mit Verbindung mit Figur 1 beschrieben, die Formhälfte 180 ersetzen und Formhälfte 116 durch eine an die gewünschte Oberseitenform des Trägerteils 120 angepasste Formhälfte einsetzen.

Wichtig in Zusammenhang mit der zweiten Ausführungsform ist, dass das Trägerteil 120 mit wenigstens einem Entlastungsdurchgang 152 versehen ist (im Ausführungsbeispiel sind drei derartige Entlastungsdurchgänge angedeutet). Diese Entlastungsdurchgänge befinden sich in dem Bereich des Trägerteils 120, an dem anschließend der aufzuschäumende Abschnitt (erster Flächenabschnitt) 122a der Formhaut 122 anzuformen ist.

Diese Entlastungsdurchgänge 152 können beim Gießen des Trägerteils 120 ausgeformt werden oder auch nachträglich in das fertige Trägerteil 120 eingearbeitet werden.

Ausgehend von der Situation gemäß Figur 2, in dem zwischen dem Trägerteil 120 und der oberen Formhälfte 116 ein Hohlraum 153 mit den Abmessungen der an das Trägerteil 120 anzuformenden Formhaut 122 gebildet ist, wird flüssiges Formhautmaterial, insbesondere ein reaktives Harzsystem (z.B. PU) mit der eingangs angesprochenen RIM-Technik, in den Hohlraum 153 eingespritzt. Dies kann durch eine nicht dargestellte Einspritzöffnung in der oberen Formhälfte 116 geschehen, oder auch durch eine ebenfalls nicht dargestellte Einspritzöffnung im beweglichen Teil 150 der unteren Formhälfte 118, die mit einer der Durchgangsöffnungen 152 fluchtet. Letztere Technik hat den Vorteil, dass sämtliche Anguß-Spuren auf der eine Sichtfläche bildenden Außenseite 154 der Formhaut 122 vermieden werden.

Es ergibt sich dann die Situation gemäß Figur 3, in der der genannte Hohlraum 153 vollständig von Formhautmaterial ausgefüllt ist. Temperatur und Druckverhältnisse sind so eingestellt, dass das pysikalisch oder chemisch gelöste Treibmittel im Formhautmaterial nicht frei wird.

Nach einer gewissen Zeit, die ausreicht, um in den sich beidseitig an den Abschnitt 122a anschließenden Abschnitt 122b und 122c mit Hautdicke unter 1 mm zu erreichen, so dass dort das Formhautmaterial zähflüssig geworden ist, wird das bewegliche Teil 150 von der Anlageposition am Trägerteil 120 nach unten bewegt, bis in die Position gemäß Figur 4. In den sich dementsprechend zwischen der Unterseite des Trägerteils 120 und der Oberseite des beweglichen Teils 150 bildenden Hohlraum 155 dringt sofort das unter einem Anfangsdruck von etwa ... HPa stehende Formhautmaterial ein, da dieses durch die Entlastungsdurchgänge 152 von obenher nachfließen kann. Es ergibt sich eine Druckentlastung auf ca. ... HPa mit der Folge, dass das pysikalisch oder chemisch gelöste Treibmittel nunmehr freigesetzt wird. Es kommt zu einem Aufschäumen im Bereich 122a. Die seitlichen Bereiche 122b und 122c bleiben jedoch im Wesentlichen schaumfrei, da sich die Druckentlastung in diese Bereiche aufgrund der dortigen Zähigkeit des Formhautmaterials nicht fortsetzen kann.

Die Schaumentwicklung im Bereich 122a ist in Figur 4 durch kleine Luftblasen symbolisch angedeutet.

Das durch die Entlastungsdurchgänge 152 hindurch getriebene überschüssige Formhautmaterial verteilt sich flächig an der Unterseite des Trägerteils 120 über einem dem Bereich 122a der Formhaut 122 im Wesentlichen entsprechenden Flächenbereich. Es kann so der Verstärkung des Trägerteils 120 dienen und muss nicht entsorgt werden.

Die Außenseite 154 der Formhaut 122, die die Sichtseite des Formteils 110 bildet, ist somit völlig unbeeinträchtigt von Überschussmaterialresten. Man erhält ein hohen optischen Anforderungen genügendes Mehrschicht-Formteil 110, welches zudem aufgrund geringen Materialeinsatzes kostengünstig herstellbar ist.

## Patentansprüche

1. Mehrschicht-Formteil (10; 110), insbesondere Innenraum-Teil für ein Karftfahrzeug, umfassend
- ein Trägerteil (20; 120) und
- eine eine Sichtfläche des Formteils (10; 110) bildende Formhaut (22; 122) am Trägerteil (20; 120),
wobei die Formhaut (22; 122) wenigstens einen im Inneren aufgeschäumten und deshalb elastisch nachgiebigen ersten Flächenabschnitt (22a; 122a) und wenigstens einen im Wesentlichen schaumfreien und deshalb im Wesentlichen nicht elastisch nachgiebigen zweiten Flächenabschnitt (22b, 22c; 122b, 122c) aufweist.

2. Mehrschicht-Formteil (10) nach Anspruch 1,
**dadurch gekennzeichnet, dass**
die Formhaut (22; 122) von einem reaktiven Harzsystem, vorzugsweise von PU gebildet ist.

3. Mehrschicht-Formteil (10) nach Anspruch 1 oder 2,
**dadurch gekennzeichnet, dass**
es großflächig ist.

4. Mehrschicht-Formteil (10) nach Anspruch 2,
**dadurch gekennzeichnet, dass**
der Fließweg in der Gußform mehr als 50 mm, besser mehr als 100 mm, am Besten mehr als 200 mm beträgt, und dass der zweite Flächenabschnitt eine Dicke kleiner 1,5 mm, besser kleiner 1 mm, am Besten kleiner 0,7 mm aufweist.

5. Mehrschicht-Formteil (10) nach einem der vorhergehenden Ansprüche,
**dadurch gekennzeichnet, dass**
die Formhaut (22; 122) mit Integralschaum gebildet ist.

6. Mehrschicht-Formteil (10) nach einem der vorhergehenden Ansprüche,
**dadurch gekennzeichnet, dass**
der wenigstens eine zweite Flächenabschnitt (22b, 22c) eine Dicke (a) von 0,1 - 2 mm, besser von 0,2 - 1,5 mm, noch besser von 0,5 - 1 mm, am Besten von etwa 0,6 - 0,8 mm aufweist.

7. Mehrschicht-Formteil (10) nach einem der vorgehenden Ansprüche,
**dadurch gekennzeichnet, dass**
der wenigstens eine zweite Flächenabschnitt (22b, 22c) eine Dichte 0,7 - 1,3 kg/cm³, besser 0,8 - 1,2 kg/cm³, am Besten von etwa 0,9 - 1,1 kg/cm³ aufweist.

8. Mehrschicht-Formteil (10) nach einem der vorgehenden Ansprüche,
**dadurch gekennzeichnet, dass**
der wenigstens eine erste Flächenabschnitt (22a) eine Dicke (b) von 5 - 20 mm, vorzugsweise 7 - 15 mm, am Besten von etwa 8 - 10 mm aufweist.

9. Mehrschicht-Formteil nach einem der vorgehenden Ansprüche,
**dadurch gekennzeichnet, dass**
der wenigstens eine erste Flächenabschnitt (22a) eine Dichte von 0,3 - 0,5 kg/cm³, vorzugsweise von 0,35 - 0,45 kg/cm³, am Besten von etwa 0,4 kg/cm³ aufweist.

10. Mehrschicht-Formteil (10) nach einem der vorgehenden Ansprüche,
**dadurch gekennzeichnet, dass**
es eine Auflage (Armlehne 14) aufweist.

11. Formhaut (22; 122), insbesondere für ein Mehrschicht-Formteil (10; 110) nach einer der vorhergehenden Ansprüche, welche aus einem reaktiven Harzsystem, vorzugsweise von PU gebildet ist, wobei die Formhaut (22; 122) wenigstens einen im Inneren aufgeschäumten und deshalb elastisch nachgiebigen ersten Flächenabschnitt (22a; 122a) und wenigstens einen im Wesentlichen schaumfreien und deshalb im Wesentlichen nicht elastisch nachgiebigen zweiten Flächenabschnitt (22b, 22c; 122b, 122c) aufweist.

12. Verfahren zur Herstellung eines Mehrschicht-Formteils (10; 110) nach einem der Ansprüche 1 bis 10,
**dadurch gekennzeichnet, dass**
im ersten Schritt die Formhaut mittels eines Formhautherstellungsverfahrens hergestellt wird, und dass in einem zweiten Schritt das Trägerteil mit Hilfe eines Trägerteilherstellungsverfahrens an die Formhaut angeformt wird.

13. Verfahren zur Herstellung eines Mehrschicht-Formteils (10) nach einem der Ansprüche 1 - 10,
**dadurch gekennzeichnet, dass**
in einem ersten Schritt das Trägerteil (20; 120) mit Hilfe eines Trägerteilherstellungsverfahrens hergestellt wird, und dass in einem zweiten Schritt die Formhaut (22; 122) mit Hilfe eines Formhautherstellungsverfahrens an das Trägerteil (20; 120) angeformt wird.

14. Verfahren, nach Anspruch 13,
**dadurch gekennzeichnet, dass**
man im ersten Schritt das Trägerteil (120) mit wenigstens einem Entlastungsdurchgang (152) im Bereich des ersten Flächenabschnitts (122a) der im zweiten Schritt anzuformenden Formhaut (122) ausbildet, und dass man im zweiten Schritt eine Druckentlastung durch Formhautmaterialabfluß (152) durch den wenigstens einen Entlastungsdurchgang vornimmt.

15. Verfahren nach Anspruch 14,
**dadurch gekennzeichnet, dass**
zur Druckentlastung ein bewegliches Teil (150) der Gußform vom Trägerteil (120) wegbewegt wird.

16. Verfahren nach einem der Ansprüche 14 oder 15,
**dadurch gekennzeichnet, dass**
man das bei der Druckentlastung durch den wenigstens einen Entlastungsdurchgang (152) hindurchgetriebene überschüssige Formhautmaterial flächig an die von der Formhaut (122) abgelegene Seite des Trägerteils (120) anformt.

17. Verfahren nach einem der Ansprüche 12 oder 16,
**dadurch gekennzeichnet, dass**
das Formhautherstellungsverfahren ein Rotationssinterverfahren ist.

18. Verfahren nach einem der Ansprüche 12 oder 16,
**dadurch gekennzeichnet, dass**
das Formhautherstellungsverfahren ein Sprühverfahren ist.

19. Verfahren nach einem der Ansprüche 12 oder 16,
**dadurch gekennzeichnet, dass**
das Formhautherstellungsverfahren ein Gießverfahren ist.

20. Verfahren nach einem der Ansprüche 12 - 19,
**dadurch gekennzeichnet, dass**
die Formhaut (22; 122) aus einem Kompakt-PUR-Schaumsystem hergestellt wird, vorzugsweise mit He und/oder N₂ als Treibmittel.

21. Verfahren nach einem der Ansprüche 12 - 20,
**dadurch gekennzeichnet, dass**
das Trägerteilherstellungsverfahren ein Spritz-Gieß-Verfahren ist.

22. Verfahren nach einem der Ansprüche 12 - 20,
**dadurch gekennzeichnet, dass**
das Trägerteilherstellungsverfahren ein Hinterpressverfahren ist.

23. Verfahren nach einem der Ansprüche 12 - 20,
**dadurch gekennzeichnet, dass**
das Trägerteilherstellungsverfahren ein Hinterprägeverfahren ist.

24. Verfahren nach einem der Ansprüche 12 - 23,
**dadurch gekennzeichnet, dass**
in einem ersten Schritt des Formhautherstellungsverfahrens ein vorzugsweise lichtstabiler Lack oder eine vorzugsweise lichtstabile Folie auf die Dekorseite der Form-Kavität eingetragen wird, und dass in einem zweiten Schritt das Formhautmaterial in die Form-Kavität eingetragen wird.

25. Verfahren zur Herstellung einer Formhaut nach einem der Ansprüche 12 - 24,
**dadurch gekennzeichnet, dass**
man die Gußform vor der Erstarrung des Formhautmaterials derart temperiert, dass die Temperatur der Formhautmaterials im ersten Flächenabschnitt (22b, 22c; 122b, 122c) unterhalb einer Mindestemperatur für die Freisetzung von Treibmittelgas im Formhautmaterial liegt.

26. Verfahren nach Anspruch 25,
**dadurch gekennzeichnet, dass**
man die Gußform bereichsweise unterschiedlich temperiert.
